# EUROPÄISCHE PATENTSCHRIFT

(11) **EP 3 691 880 B1**
(45) Veröffentlichungstag und Bekanntmachung des Hinweises auf die Patenterteilung: **26.01.2022**
(21) Anmeldenummer: 18778530.8
(22) Anmeldetag: 02.10.2018
(51) Int. Cl.: B29C 70/52

(54) **PULTRUSIONSVERFAHREN ZUR HERSTELLUNG VON FASERVERSTÄRKTEN KUNSTSTOFFPROFILEN UND PULTRUSIONSVORRICHTUNG**
PULTRUSION METHOD FOR PRODUCING FIBRE-REINFORCED PLASTIC PROFILES AND PULTRUSION DEVICE
PROCÉDÉ DE PULTRUSION POUR LA FABRICATION DE PLASTIQUES RENFORCÉS PAR DES FIBRES ET DISPOSITIF DE PULTRUSION

(30) Priorität: 06.10.2017 EP 17195206
(43) Veröffentlichungstag der Anmeldung: 12.08.2020
(73) Patentinhaber: Covestro Intellectual Property GmbH & Co. KG, 51373 Leverkusen (DE); KraussMaffei Technologies GmbH, 80997 München (DE)
(72) Erfinder: KILIAN, Benedikt, 40237 Düsseldorf (DE); BRÜNING, Dirk, 51377 Leverkusen (DE); REMMEL, Jochen, 51381 Leverkusen (DE)
(74) Vertreter: Levpat
(86) Internationale Anmeldenummer: PCT/EP2018/076832
(87) Internationale Veröffentlichungsnummer: WO 2019/068728

(56) Entgegenhaltungen:
- EP-A1- 0 503 554
- EP-A1- 0 503 554
- EP-A1- 2 105 286
- EP-A1- 2 105 286
- US-A- 4 640 065
- US-A- 4 640 065
- US-A- 5 205 898
- US-A- 5 205 898

## Beschreibung

Die Erfindung betrifft ein Pultrusionsverfahren zur Herstellung von faserverstärkten Kunststoffprofilen und eine Pultrusionsvorrichtung.

Pultrusionsverfahren zur Herstellung von faserverstärkten Kunststoffprofilen sind an sich bekannt und werden zur Herstellung von zahlreichen unterschiedlichen Profilen in diversen Anwendungsgebieten, wie beispielsweise im Bauwesen (zum Beispiel für Fenster- und Türrahmen), in der Elektrik (zum Beispiel Kabelführungskanäle) sowie bei Konsumgütern (zum Beispiel Sportgeräte) eingesetzt. Üblicherweise werden in Pultrusionsverfahren Verstärkungsfasern (zum Beispiel Glasfasern oder Kohlenstofffasern), die in Form von Endlos-Fasern, Endlos-Faserbündeln (Rovings) oder textilen Halbzeugen vorliegen, kontinuierlich mit einem Kunststoff (zum Beispiel ein geschmolzener Thermoplast, wie beispielsweise Polypropylen oder ein flüssiges Reaktionsharz, wie beispielsweise Polyurethan) imprägniert und anschließend durch ein temperierbares Werkzeug gezogen, in dem die finale Profilgebung erfolgt und der Kunststoff fest wird.

In Pultrusionsverfahren zur kontinuierlichen Herstellung von faserverstärkten Profilen mit Polyurethan-Matrix werden üblicherweise Injektionsboxen zur Imprägnierung der Verstärkungsfasern verwendet. Injektionsboxen werden in der Literatur vielfach beschrieben. Die bekannten Injektionsboxen laufen klassischerweise in Produktionsrichtung bis zum finalen Profilquerschnitt konisch zu, um Druck aufzubauen und die Fließbewegung des flüssigen Polyurethan-Gemischs in die Verstärkungsfasern zu unterstützen. Damit kann eine vollständige Imprägnierung der Verstärkungsfasern und somit eine möglichst hohe Qualität der hergestellten Profile erzielt werden.

So wird beispielsweise in EP 712716 A1 ein Verfahren sowie eine zugehörige Extrusionsimprägniervorrichtung beschrieben, bei dem unter Verwendung einer Imprägnierzone in Form einer gedämpften Schwingung Profile hergestellt werden. Darüber hinaus kann die Höhe des Imprägnierkanals der Vorrichtung während des Betriebes verstellt werden.

EP-A-2105286 offenbart ein Pultrusionsverfahren und eine Pultrusionsvorrichtung.

Nachteilig bei dem beschriebenen Verfahren unter Verwendung der Injektionsbox ist, dass sich durch die üblicherweise vorgegebenen Prozess- und Rohstoffparameter ein Druck in der Injektionsbox einstellt, auf den von außen kein Einfluss genommen werden kann. Steigert man zum Beispiel beim Start der Produktion schrittweise die Produktionsgeschwindigkeit, so stellt sich in Abhängigkeit von der vorgegebenen Geschwindigkeit ein Druck ein, der unter Umständen zu gering oder zu hoch ist. Möchte man während der laufenden Produktion das Reaktionsharz wechseln (zum Beispiel auf ein Reaktionsharz mit höherer Viskosität) oder den Füllstoff- oder Fasergehalt erhöhen, dann stellt sich in der Injektionsbox automatisch ein anderer Druck ein, der unter Umständen ebenfalls zu gering oder zu hoch sein kann.

Aufgabe der vorliegenden Erfindung war es daher, ein Verfahren sowie eine Vorrichtung zur Verfügung zu stellen, bei dem die vorgenannten Nachteile vermieden werden können.

Überraschenderweise wurde gefunden, dass das im Folgenden näher beschriebene Pultrusionsverfahren sowie die Pultrusionsvorrichtung die oben genannten Nachteile vermeidet, indem der Druck in der Injektionsbox durch eine Veränderung des Öffnungswinkels während des Betriebes eingestellt werden kann.

Gegenstand der vorliegenden Anmeldung ist ein Pultrusionsverfahren zur Imprägnierung von Endlos-Fasern, von Endlos-Faserbündeln (Rovings) oder von textilen Halbzeugen (1) mittels geschmolzenem Thermoplast oder mittels flüssigem Reaktionsharz (10) zur Herstellung von faserverstärkten Profilen, wobei
i) die Endlos-Fasern, die Endlos-Faserbündel oder die textilen Halbzeuge (1) in und durch einen geschlossenen Kanal (2) einer Injektionsbox (3) gezogen werden,
ii) in den Kanal (2) der Injektionsbox (3) durch eine oder mehrere Öffnungen (8) der geschmolzene Thermoplast oder das flüssige Reaktionsharz (10) zur Tränkung der Endlos-Fasern, der Endlos-Faserbündel oder der textilen Halbzeuge (1) gegeben wird,
iii) die getränkten Endlos-Fasern, Endlos-Faserbündel oder textilen Halbzeuge (1) aus dem geschlossenen Kanal (2) der Injektionsbox (3) in eine Kammer (4) eines temperierbaren Werkzeugs zum Abkühlen des geschmolzenen Thermoplasts oder zum Aushärten des Reaktionsharzes (10) unter Ausbildung des faserverstärkten Profils gezogen werden,
iv) das faserverstärkte Profil aus der Kammer (4) abgezogen wird, welches dadurch gekennzeichnet ist, dass
der Binnendruck (p) im Bereich der Austrittsöffnung (5) des Kanals (2) dadurch eingestellt wird, dass der Querschnitt der Eintrittsöffnung (6) des Kanals (2) verändert wird, indem der Anstellwinkel (α, α') mindestens einer der Wandungen des Kanals (2) zur Vertikalen (7) der Austrittsöffnung (5) variiert wird.

Durch das erfindungsgemäße Verfahren ist es möglich, die Herstellung der faserverstärkten Profile kontinuierlich bei konstantem Druck optimal durchzuführen und z.B. die Pultrusionsgeschwindigkeit bei Bedarf während des Verfahrens zu ändern, auf geänderte Umgebungsbedingungen, wie die Raumtemperatur zu reagieren und im laufenden Betrieb das Reaktionsharz zu wechseln.

Um das erfindungsgemäße Verfahren durchführen zu können, kann beispielsweise die im Pultrusionsverfahren eingesetzte Injektionsbox so ausgelegt sein, dass der Querschnitt der Eintrittsöffnung (6) des Kanals der Injektionsbox veränderbar ist, indem der Anstellwinkel (α, α') mindestens einer der Wandungen des Kanals zur Vertikalen (7) der Austrittsöffnung variierbar ist.

In Abhängigkeit der Prozessparameter (wie zum Beispiel Produktionsgeschwindigkeit und Temperatur in der Injektionsbox) sowie der Rohstoffparameter (wie zum Beispiel Viskosität des Reaktionsharzes und Füllstoffgehalt) stellt sich ein bestimmter Innendruck in der Injektionsbox ein. Die Höhe des Innendrucks wird auch durch den Anstellwinkel in der Injektionsbox beeinflusst.

Für einen stabilen Produktionsprozess und zur Herstellung von Profilen mit guter Qualität ist es daher wichtig, einen optimalen Druck in der Injektionsbox zu erreichen. So darf der Druck in der Injektionsbox zur vollständigen Tränkung der Verstärkungsfasern nicht zu gering sein. Andererseits darf der Druck in der Injektionsbox auch nicht zu groß werden, um die Prozessstabilität nicht zu gefährden. Dies wird durch den Anstellwinkel erreicht.

Ein weiterer Gegenstand der vorliegenden Anmeldung ist eine Pultrusionsvorrichtung zur Imprägnierung von Endlos-Fasern, von Endlos-Faserbündeln (Rovings) oder textilen Halbzeugen (1) mittels geschmolzenem Thermoplast oder mittels flüssigem Reaktionsharz (10) zur Herstellung von faserverstärkten Profilen, welches eine Injektionsbox (3) aus mindestens zwei Werkzeughälften (9, 9') mit einem geschlossenen Kanal (2), der durch die mindestens zwei Werkzeughälften (9, 9') gebildet wird und der eine Eintrittsöffnung (6) und eine Austrittsöffnung (5) aufweist, und eine sich an die Austrittsöffnung des Kanals anschließende Kammer (4) eines temperierbaren Werkzeugs aufweist, wobei
der Querschnitt der Eintrittsöffnung (6) des Kanals veränderbar ist, indem der Anstellwinkel (α, α') mindestens einer der Wandungen des Kanals zur Vertikalen (7) der Austrittsöffnung variierbar ist.

Textile Halbzeuge sind beispielsweise Gewebe, Gelege und Fasermatten.

Der Binnendruck (p) ist der Druck, der an der Austrittsöffnung (5) vorliegt.

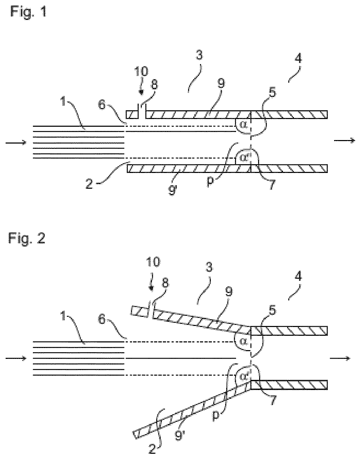

Die Figur 1 stellt einen Querschnitt eines Teils einer Pultrusionsanlage dar. Die Endlos-Fasern, Endlos-Faserbündel (Rovings) oder textilen Halbzeuge 1 werden in die Eintrittsöffnung 6 des Kanals 2 einer Injektionsbox 3 aus 2 Werkzeughälften 9 und 9' und durch die Austrittsöffnung 5 des Kanals 2 in eine Kammer 4 eines Werkzeugs gezogen. Geschmolzener Thermoplast oder flüssiges Reaktionsharz 10 werden über mindestens eine Öffnung 8 in den Kanal 2 gegeben.

Die Figur 2 ist ebenfalls ein Querschnitt mit dem Unterschied zu Figur 1, dass die Winkel α, α' andere Werte aufweisen.

Die Erfindung soll anhand der nachfolgenden Beispiele näher erläutert werden.

### Beispiel:

Als Matrix-Material wurde ein Polyurethansystem eingesetzt, welches als Polyolkomponente folgendes Gemisch aufweist:
62,20 Gew. *%* eines mit Glycerin gestarteten Polyetherpolyols auf Propylenoxidbasis, Hydroxylzahl (OH-Zahl) = 400 mg KOH/g 11,00 Gew. *%* Glycerin 10,00 Gew. *%* eines mit Propylenglykol gestarteten Polyetherpolyols auf Propylenoxidbasis, Hxdroxylzahl (OH-Zahl) = 515 mg KOH/g 12,00 Gew. *%* eines mit Propylenglykol gestarteten Polyetherpolyols auf Propylenoxid/Ethylenoxidbasis, Hydroxylzahl (OH-Zahl) = 57 mg KOH/g 0,80 Gew. *%* Diisooctyl-2,2'-[(dioctylstannylen)bis(thio)]diacetat (Katalysator) 4,00 Gew. *%* MOLSIV^{®} L - Paste (50 *%*-ige Dispersion von MOLSIV^{®} L-Pulver in Rizinusöl) von der Firma UOP (Wasserbinder)
100 Gewichtsteile der vorgenannten Polyolkomponente wurden mit 4 Gewichtsteilen Luvotrent^{®} TL HB 550 (Trennmittel von der Firma Lehmann & Voss) versetzt und intensiv verrührt.

Dieses Gemisch wurde mittels einer Misch- und Dosieranlage mit einem polymeren Diphenylmethandiisocyanat (MDI) mit einem NCO-Gehalt von 32,0 Gew.*%* (enthält 69 Gew. *%* monomeres MDI mit einem Gehalt an 2,4'-MDI und 2,2'-MDI von in Summe 8 Gew. *%*) in einem Mischungsverhältnis vermischt, so dass der Isocyanatindex von 114 vorlag.

Als Verstärkungsfasern wurden unidirektionale Glasfaser-Rovings eingesetzt. Der Fasergehalt im hergestellten Profil lag bei ca. 90 Gew.-*%*.

Es wurde ein Rechteck-Profil (60 mm × 5 mm) hergestellt. Es wurde ein Pultrusionswerkzeug mit einer Länge von 1 m verwendet. Das Werkzeug besaß in Pultrusionsrichtung drei Heizzonen, die auf Temperaturen von 160°C/180°C/190°C (bei einem Öffnungswinkel von 90,7°) bzw. 150°C/170°C/180°C (bei einem Öffnungswinkel von 91,6°) temperiert wurden.

Es wurde eine Injektionsbox mit einem Öffnungswinkel α und a' von je 90,7° je Injektionsboxhälfte (oben/unten) verwendet. Bei einer Produktionsgeschwindigkeit von 0,5 m/min (z.B. Inbetriebnahme der Anlage) stellte sich ein Druck am Ende der Injektionsbox von p = 27,2 bar ein. Die Abzugskraft betrug F = 0,1 t. Die Produktionsgeschwindigkeit wurde auf 1,1 m/min (z.B. zur Produktion von Profilen) erhöht. Der Druck stieg auf p = 38,0 bar und die Kraft auf F = 1,8 t. Diese Steigerung des Drucks und der Abzugskraft war kritisch, da der Prozess instabil wurde und abgebrochen werden musste.

Durch Änderung des Winkels α und α' der Injektionsbox auf 91,6° je Injektionsboxhälfte (oben/unten), sank sowohl der Druck als auch die Abzugskraft signifikant ab. Bei der eingestellten Produktionsgeschwindigkeit von 1,1 m/min stellte sich ein Druck von p = 10,2 bar und eine Kraft von F = 0,1 t ein.

Durch die Anpassung des Öffnungswinkels α und α' konnte der Prozess stabil ohne Probleme auch bei dieser höheren Produktionsgeschwindigkeit durchgeführt werden.

## Patentansprüche

1. Pultrusionsverfahren zur Imprägnierung von Endlos-Fasern, von Endlos-Faserbündeln - sogenannten Rovings - oder von textilen Halbzeugen (1) mittels geschmolzenem Thermoplast oder mittels flüssigem Reaktionsharz (10) zur Herstellung von faserverstärkten Profilen, wobei
i) die Endlos-Fasern, die Endlos-Faserbündel oder die textilen Halbzeuge (1) in und durch einen geschlossenen Kanal (2) einer Injektionsbox (3) gezogen werden,
ii) in den Kanal (2) der Injektionsbox (3) der geschmolzene Thermoplast oder das flüssige Reaktionsharz (10) zur Tränkung der Endlos-Fasern, der Endlos-Faserbündel oder der textilen Halbzeuge (1) gegeben wird,
iii) die getränkten Endlos-Fasern, Endlos-Faserbündel oder textilen Halbzeuge aus dem geschlossenen Kanal (2) der Injektionsbox (3) in eine Kammer (4) eines temperierbaren Werkzeugs zum Abkühlen des geschmolzenen Thermoplasts oder zum Aushärten des Reaktionsharzes unter Ausbildung des faserverstärkten Profils gezogen werden,
iv) das faserverstärkte Profil aus der Kammer (4) abgezogen wird, **dadurch gekennzeichnet, dass**
der Binnendruck (p) im Bereich der Austrittsöffnung (5) des Kanals (2) dadurch eingestellt wird, dass der Querschnitt der Eintrittsöffnung (6) des Kanals (2) verändert wird, indem der Anstellwinkel (α, α') mindestens einer der Wandungen des Kanals (2) zur Vertikalen (7) der Austrittsöffnung (5) variiert wird.

2. Verfahren gemäß Anspruch 1, **dadurch gekennzeichnet, dass** die Anpassung des Winkels (α, α') automatisch durch eine druckabhängige Steuerung erfolgt.

3. Pultrusionsvorrichtung zur Imprägnierung von Endlos-Fasern, von Endlos-Faserbündeln - sogenannten Rovings - oder textilen Halbzeugen (1) mittels geschmolzenem Thermoplast oder mittels flüssigem Reaktionsharz (10) zur Herstellung von faserverstärkten Profilen, welches eine Injektionsbox (3) aus mindestens zwei Werkzeughälften (9,9') mit einem geschlossenen Kanal (2), der durch die mindestens zwei Werkzeughälften (9,9') gebildet wird und der eine Eintrittsöffnung (6) und eine Austrittsöffnung (5) aufweist, und eine sich an die Austrittsöffnung des Kanals anschließende Kammer (4) eines temperierbaren Werkzeugs aufweist, wobei
der Querschnitt der Eintrittsöffnung (6) des Kanals veränderbar ist, indem der Anstellwinkel (α, α') mindestens einer der Wandungen des Kanals (2) zur Vertikalen (7) der Austrittsöffnung variierbar ist.

## Claims

1. Pultrusion process for the impregnation of continuous-filament fibers, of continuous-filament-fiber bundles, rovings, or of semifinished textile products (1) by means of molten thermoplastic or by means of liquid reactive resin (9), for the production of fiber-reinforced profiles, where
i) the continuous-filament fibers, the continuous-filament-fiber bundles, or the semifinished textile products (1) are drawn into and through an enclosed channel (2) of an injection box (3),
ii) in order to saturate the continuous-filament fibers, the continuous-filament-fiber bundles, or the semifinished textile products (1), the molten thermoplastic or the liquid reactive resin (10) is charged into the channel (2) of the injection box (3),
iii) in order to cool the molten thermoplastic, or in order to harden the reactive resin, with formation of the fiber-reinforced profile, the saturated continuous-filament fibers, continuous-filament-fiber bundles, or semifinished textile products are drawn out from the enclosed channel (2) of the injection box (3) into a chamber (4) of a temperature-controllable die,
iv) the fiber-reinforced profile is drawn out from the chamber (4), **characterized in that**
the internal pressure (p) in the region of the discharge aperture (5) of the channel (2) is adjusted by altering the cross section of the entry aperture (6) of the channel (2), by varying the set angle (α, α') of at least one of the walls of the channel (2) in relation to the vertical plane (7) of the discharge aperture (5).

2. Process according to Claim 1, **characterized in that** appropriate adjustment of the angle (α, α') is achieved automatically via pressure-dependent control.

3. Pultrusion device for the impregnation of continuous-filament fibers, of continuous-filament-fiber bundles (rovings), or of semifinished textile products (1) by means of molten thermoplastic or by means of liquid reactive resin (10), for the production of fiber-reinforced profiles, which comprises an injection box (3) made of at least two die halves (9, 9') with an enclosed channel (2) formed by the at least two die halves (9, 9') and having an entry aperture (6) and a discharge aperture (5), and comprises, attached to the discharge aperture of the channel, a chamber (4) of a temperature-controllable die, where
the cross section of the entry aperture (6) of the channel can be altered by virtue of the variability of the set angle (α, α') of at least one of the walls of the channel (2) in relation to the vertical plane (7) of the discharge aperture.

## Revendications

1. Procédé de pultrusion pour l'imprégnation de fibres sans fin, de paquets de fibres sans fin, mèches ou de produits semi-finis textiles (1) au moyen d'une matière thermoplastique fondue ou au moyen d'une résine réactive liquide (9) pour la préparation de profilés renforcés par des fibres,
i) les fibres sans fin, les paquets de fibres sans fin ou les produits semi-finis textiles (1) étant tiré(e)s dans et à travers un canal fermé (2) d'une boîte d'injection (3),
ii) la matière thermoplastique fondue ou la résine réactive liquide (10) étant versée dans le canal (2) de la boîte d'injection (3) pour imbiber les fibres sans fin, les paquets de fibres sans fin ou les produits semi-finis textiles (1),
iii) les fibres sans fin, les paquets de fibres sans fin ou les produits semi-finis textiles imbibé(e)s étant tiré(e)s hors du canal fermé (2) de la boîte d'injection (3) dans un compartiment (4) d'un outil qui peut être tempéré pour refroidir la matière thermoplastique fondue ou durcir la résine réactive avec formation du profilé renforcé par des fibres,
iv) le profilé renforcé par des fibres étant retiré du compartiment (4), **caractérisé en ce que**
la pression intérieure (p) dans la zone de l'ouverture de sortie (5) du canal (2) peut être ajustée de telle manière que la section transversale de l'ouverture d'entrée (6) du canal (2) soit modifiée en variant l'angle d'inclinaison (α, α') d'au moins l'une des parois du canal (2) à la verticale (7) de l'ouverture de sortie (5).

2. Procédé selon revendications 1, **caractérisé en ce que** l'ajustement de l'angle (α, α') est réalisé de manière automatique par une commande dépendant de la pression.

3. Dispositif de pultrusion pour l'imprégnation de fibres sans fin, de paquets de fibres sans fin (mèches) ou de produits semi-finis textiles (1) au moyen d'une matière thermoplastique fondue ou au moyen d'une résine réactive liquide (10) pour la préparation de profilés renforcés par des fibres, qui présente une boîte d'injection (3) composée d'au moins deux moitiés d'outil (9, 9') comportant un canal fermé (2), qui est formé par les au moins deux moitiés d'outil (9, 9') et présente une ouverture d'entrée (6) et une ouverture de sortie (5), et qui présente un compartiment (4), adjacent à l'ouverture de sortie du canal, d'un outil qui peut être tempéré,
la section transversale de l'ouverture d'entrée (6) du canal pouvant être modifiée, en raison du fait que l'angle d'inclinaison (α, α') d'au moins l'une des parois du canal (2) à la verticale (7) de l'ouverture de sortie peut être varié.
